Europäisches Patentamt

European Patent Office

Office européen des brevets

(19)

(11)  EP 0 809 941 B1

(12)  EUROPEAN PATENT SPECIFICATION

(45) Date of publication and mention
of the grant of the patent:
**12.06.2002  Bulletin 2002/24**

(51) Int Cl.[7]: **A23K 1/14**, A23K 1/18,
A23P 1/14

(21) Application number: **97660055.1**

(22) Date of filing: **16.05.1997**

(54) **Poultry fodder and procedure for its manufacture**

Hühnerfutter und Verfahren zur Herstellung

Nourriture pour la volaille ainsi que procédé pour sa production

(84) Designated Contracting States:
**AT BE CH DE DK ES FR GB GR IE IT LI LU NL PT
SE**

(30) Priority: **30.05.1996  FI  962273**

(43) Date of publication of application:
**03.12.1997  Bulletin 1997/49**

(73) Proprietor: **SUOMEN REHU OY
00240 Helsinki (FI)**

(72) Inventor: **Helander, Eija
00780 Helsinki (FI)**

(74) Representative: **Papula, Antti et al
Papula Rein Lahtela Oy,
P.O. Box 981
00101 Helsinki (FI)**

(56) References cited:
**WO-A-94/07376          GB-A- 289 289**

**Description**

The present invention relates to a poultry fodder as defined in the preamble of claim 1. The invention also relates to a procedure for the manufacture of the poultry fodder.

There are various prior-art fodder compositions containing corn, intended for poultry. A fodder that contains only finely powdered corn does not meet the specific requirement of poultry regarding the degree of coarseness of fodder. Therefore, such fodder may cause problems of digestion. In consequence of the digestive problems, the processibility of poultry dung suffers, its further processing e.g. into manure is difficult. Moreover, eggs easily get dirty, leading to bacterial contamination problems and economic losses to egg producers. For these reasons, manufactured fodders are usually at least partially composed of coarsely powdered corn. Poultry has also been fed using whole grains besides manufactured fodder. However, the use of corn grains as a separate fodder leads to the necessity of providing for the distribution of two separate fodders. In addition, when corn grains are used as a separate fodder and the fodder is subjected to a heat treatment, the corn is not treated by the heat treatment procedure for fodder and therefore its hygienic quality varies.

WO 94 07376 A (FELLESKJOPET FÔRUTVIKLING BA) relates to grain processing intended for ruminants feed. The grains, or mixture of grains and powdered grains, are expanded.

GB 289 289 A (BERTELS H. B.) concerns an improved feed in granular form for poultry.

The object of the invention is to eliminate the drawbacks referred to above.

A specific object of the invention is to present a new type of poultry fodder that does not involve any digestion problems in poultry or soiling of e.g. hen's eggs. A further object of the invention is to present a fodder in which it is possible to use non-powdered corn as grains and, if desired, coarsely crushed or powdered corn without the corn grains or coarsely crushed or powdered corn particles being separated from the rest of the fodder mass.

As to the features characteristic of the invention, reference is made to the claims.

The fodder of the invention contains whole corn grains and is an expanded fodder so that the fodder forms a mainly homogeneous mixture in which the grains are combined with the fodder mass. The fodder preferably also contains coarsely crushed or powdered corn. Thus, the corn grain particles consist of whole corn grains, crushed corn grain particles, powdered corn grain particles and in general coarse corn grain particles produced by any method (i.e. the corn grain particles are of a coarse quality, having a particle size mainly over e.g. 1 mm, preferably even over 2 mm). The corn is thus in the form of whole grains and may consist of corn powdered, crushed or otherwise coarsely treated e.g. in a hammer-bar mill, other type of mill, a roller crusher or in general in any type of corn treatment apparatus.

The fodder of the invention contains 1 - 90 %, suitably 10 - 50 %, preferably 10 - 30 % corn grains and/or coarsely crushed or powdered corn. The corn used in the fodder may be barley, wheat, oats, rye, Indian corn, rice, rye wheat (triticale), sorghum or any other kind of corn commonly used in poultry fodder. In addition to whole corn grains and coarsely crushed or powdered corn, the fodder may also contain any corn flour commonly used in fodder, yet always in a quantity smaller than the quantity of corn grains and coarse corn.

The fodder of the invention may additionally contain ordinary quantities of carbon hydrates, proteins, fat, micronutrients and vitamins, possibly enzymes and/or other conventional fodder components. The protein source may be e.g. soy, meat-and-bone meal, fish meal or a similar protein source suited for use in poultry fodder.

In the procedure of the invention, the fodder components are mixed and expanded. For expansion, the fodder raw material mixture is conveyed to an expander, to its input section or the like, and then further through the expander and its matrix, using a screw conveyor. When the fodder mixture is forced through the matrix, the sudden pressure drop results in an expanded state of the product. The fodder stays in the expander for approx. 1 - 60 seconds, preferably about 1 - 5 seconds.

The effect of the expander treatment can be controlled by adjusting the process circumstances, such as temperature, humidity, retention time, etc. The temperature in the expander is about 80 - 140 °C, suitably about 100 - 120 °C, preferably 90 - 110 °C. The temperature of the expander can be adjusted using steam and/or pressure. If desired, water can be added to the expander to increase humidity.

The humidity of the expanded and finished poultry fodder is suitably below 13 % by weight, e.g. $11 \pm 2$ % by weight, so it is easy to handle and store.

Instead of an expander, it is possible to use an extruder in the procedure of the invention, but it generally involves higher costs than using an expander.

Due to the expansion, the corn is bound with the fodder mass and is not separated from the fodder, so the fodder forms a mainly homogeneous mixture in which the coarser corn particles are combined with the rest of the mainly homogeneous fodder mass, partly solidified via expansion.

After expansion, the fodder can be granulated and/or, if necessary, crispened to improve its processibility, using granulating and/or crispening methods known in themselves in connection with fodder treatment. The crispening can also be implemented in connection with the expansion, in other words, the fodder mass pressed through the expander matrix can be crispened e.g. by using a rotating cutting blade in a known manner.

The technical quality of the expanded and, if necessary, granulated and/or crispened fodder is good, the grains are fast and the fodder remains homogeneous. Furthermore, the fodder is of a good hygienic quality as compared with fodder and feeding methods in which non-powdered grains are given separately, because the expansion treatment destroys mildew germs and bacteria, such as salmonella, that may be present. In the present procedure, the entire fodder mixture can be mixed and treated at the same time. This reduces the work cost related to feeding.

The use of whole grains and coarse corn in fodder also has a beneficial effect on the consistency of hen manure. The manure of hens fed with the fodder of the invention does not soil the eggs and is easy to handle.

In the following, the invention is described in detail by the aid of a few examples of its embodiments.

Example 1

In this test, hen fodder was produced by expanding. The raw materials (3000 kg in all) were mixed and expanded, temperature 100 °C, expander treatment time about 3 s, humidity of final product about 11 % by weight.

Table 1 shows the raw materials used, Table 2 the analytic results regarding the fodder produced.

After the expansion, the fodder produced was granulated, in other words, the fodder mass penetrating through the expander matrix was granulated in the matrix and crispened by means of rollers. The finished fodder formed a mainly coherent homogeneous mass in which the whole oats grains were fast combined with the rest of the fodder material. Oats grains and coarse corn flour were not separated during the handling of the fodder, i.e. the fodder had a good processibility.

Example 2

In this test, fodder was produced mainly in the same circumstances as in Example 1. The whole grains used were of wheat, whereas the barley and oats had been roller-powdered like the barley and wheat in Example 1.

The raw material composition is presented in Table 1, and the analytic results regarding the finished fodder are presented in Table 2.

The invention is not limited to the examples of its embodiments presented above, but many variations are possible within the inventive idea defined by the claims.

Table 1

| Raw material | % by weight |
| --- | --- |
| Oats, grains | 19.2 |
| Barley/enzyme | 16.2 |
| Wheat/enzyme | |
| roller-powdered, coarse | 15.0 |
| Dry-rolled barley, coarse | 15.0 |
| Wheat feed meal | 5.0 |
| Soy succus | 8.0 |
| Soy groats | 4.9 |
| Fish meal | 1.4 |
| Maize gluten 60 | 2.8 |
| Vegetable oil mixture | 0.3 |
| Process returns, hen | 2.0 |
| Monocalcium phosphate | 0.6 |
| Table salt | 0.1 |
| Lime for chicken | 8.3 |
| Sodium carbonate | 0.35 |
| Methionine DL | 0.04 |
| Phytase (liquid) | 0.01 |
| es vitamins for hens | 0.2 |
| es race elements for hens | 0.25 |
| es Rancol Yellow | 0.2 |
| es vitamin K | 0.1 |
| Avizyme 1210 liquid | 0.05 |

Table 1 (continued)

| Raw material | % by weight |
|---|---|
|  | Total 100. |

Table 2

| Results of analysis | | | |
|---|---|---|---|
| Dry matter | 89.0 w-% | Cl | 1.5 g/kg |
| Fat | 3.4 w-% | LYS | 0.8 |
| Fodder protein | 16.7 w-% | MET | 0.3 |
| Fodder fibres | 4.6 w-% | MET+KYS | 0.6 |
| Ash | 11.7 w-% | Kantak | 2.7 mg/kg |
| AME | 10.8 MJ/kg | Ksanto | 11.6 mg/kg |
| Ca | 35.1 g/kg | C 18:2W6 | 1.2 |
| Phosph. | 5.3 g/kg | Betaine | 514.4 mg/kg |
| Mg | 2.1 g/kg | P av K | 2.7 g/kg |

Table 3

| Raw material | % by weight |
|---|---|
| Wheat, grains | 10.0 |
| Barley, coarse | 18.1 |
| Oats, coarse | 10.0 |
| Wheat/enzyme | 25.1 |
| Soy succus | 20.0 |
| Soy groats | 7.8 |
| Vegetable oil mixture | 0.5 |
| Vegetable oil mixture re-fat | 3.0 |
| Process returns | 2.0 |
| Feeding lime | 1.2 |
| Monocalcium phosphate | 0.9 |
| Table salt | 0.05 |
| Sodium carbonate | 0.30 |
| Betaine 97 % | 0.06 |
| L-lycine | 0.33 |
| Methionine DL | 0.26 |
| Sacox 12 % | 0.05 |
| Phytase (liquid) | 0.01 |
| Es race elements for hens | 0.25 |
| Es broiler vita | 0.20 |
| Avizyme 1210 liquid | 0.05 |
|  | Total 100. |

Table 4

| Results of analysis | | | |
|---|---|---|---|
| Dry matter | 88.7 w-% | LYS | 1.23 |
| Fat | 6.7 w-% | MET | 0.54 |
| Fodder protein | 20.0 w-% | MET+KYS | 0.87 |
| Fodder fibres | 4.1 w-% | C18:2W6 | 2.68 |

Table 4   (continued)

| Results of analysis | | | |
| --- | --- | --- | --- |
| Ash | 5.2 w-% | Betaine | 582 mg/kg |
| Ca | 7.76 g/kg | P av K | 3.2 g/kg |
| Phosph. | 6.25 g/kg | | |
| Na | 1.47 g/kg | | |
| Cl | 1.53 g/kg | | |

The application examples are intended to visualize the invention without limiting it in any way.

**Claims**

1. Poultry fodder which contains corn, hydrocarbonates, fat, protein, micronutrients, vitamins, possibly enzymes and/or other conventional fodder components and has been subjected to a heat treatment, **characterized in that** the fodder contains non-powdered corn grains and that it has been expanded so that the fodder forms a mainly homogeneous mixture in which the grains are combined with the fodder mass.

2. Poultry fodder as defined in claim 1, **characterized in that** the fodder contains corn in a coarsely crushed or powdered form.

3. Fodder as defined in claim 1, **characterized in that** the amount of corn grains contained in the fodder is 1 - 90 w-%, suitably 10 - 50 w-%, preferably 10 - 30 w-%.

4. Procedure for the manufacture of poultry fodder which contains corn, hydrocarbonates, fat, protein, micronutrients, vitamins, possibly enzymes and/or other conventional fodder components and is subjected to a heat treatment, **characterized in that** non-powdered corn grains are mixed with the other fodder components and the mixture obtained is expanded so that the fodder forms a mainly homogeneous mixture in which the grains are combined with the fodder mass.

5. Procedure as defined in claim 5, **characterized in that** coarsely crushed or powdered corn is mixed with the other fodder components and the mixture obtained is expanded.

6. Procedure as defined in claim 4 or 5, **characterized in that** the amount of corn grains contained in the fodder is 1 - 90 w-%, suitably 10 - 50 w-%, preferably 10 - 30 w-%.

7. Procedure as defined in any one of claims 4 - 6, **characterized in that** the temperature used in the expander is 80 - 140 °C, preferably 90 - 110 °C.

8. Procedure as defined in any one of claims 4 - 7, **characterized in that** the mixture of fodder components is held in the expander for 1 - 60 seconds, preferably 1 - 5 seconds.

**Patentansprüche**

1. Geflügelfutter, welches Getreide, Kohlenhydrate, Fett, Protein, Mikronährstoffe, Vitamine, möglicherweise Enzyme und/oder andere herkömmliche Futterkomponenten enthält und einer Wärmebehandlung unterzogen worden ist, **dadurch gekennzeichnet, dass**
das Futter nicht gepulverte Getreidekörner enthält und es derart aufgeweitet wurde, dass das Futter eine vorwiegend homogene Mischung ausbildet, in der die Körner mit der Futtermasse vereinigt vorliegen.

2. Geflügelfutter wie in Anspruch 1 definiert, **dadurch gekennzeichnet, dass** das Futter Getreide in einer grob zerkleinerten oder gepulverten Form enthält.

3. Futter wie es in Anspruch 1 definiert ist, **dadurch gekennzeichnet, dass** die in dem Futter enthaltene Menge an Getreidekörnern bei 1 - 90 Gew.-%, geeigneterweise bei 10 - 50 Gew.-% und bevorzugt bei 10 - 30 Gew.-% liegt.

**4.** Verfahren zur Herstellung des Geflügelfutters, welches Getreide, Kohlenhydrate, Fett, Protein, Mikronährstoffe, Vitamine, möglicherweise Enzyme und/oder andere herkömmliche Futterkomponenten enthält und einer Wärmebehandlung unterzogen worden ist,
**dadurch gekennzeichnet, dass**
die nicht gepulverten Getreidekörner mit den anderen Futterkomponenten vermischt werden und die erhaltene Mischung derart aufgeweitet wird, dass das Futter eine vorwiegend homogene Mischung ausbildet, in der die Körner mit der Futtermasse vereinigt vorliegen.

**5.** Verfahren wie in Anspruch 5 definiert, **dadurch gekennzeichnet, dass** grob zerkleinertes oder gepulvertes Getreide mit den anderen Futterkomponenten vermischt wird und die erhaltene Mischung aufgeweitet wird.

**6.** Verfahren wie in Anspruch 4 oder 5 definiert, **dadurch gekennzeichnet, dass** die in dem Futter enthaltene Menge an Getreidekörnern bei 0 - 90 Gew.-%, geeigneterweise bei 10 - 50 Gew.-% und bevorzugt bei 10 - 30 Gew.-% liegt.

**7.** Verfahren wie in einem der Ansprüche 4 bis 6 definiert, **dadurch gekennzeichnet, dass** die verwendete Temperatur in der Expansionsvorrichtung bei 80 - 140 °C und bevorzugt bei 90 - 110 °C liegt.

**8.** Verfahren wie in einem der Ansprüche 4 bis 7 definiert, **dadurch gekennzeichnet, dass** die Mischung der Futterkomponenten in der Expansionsvorrichtung für 1 - 60 Sekunden und bevorzugt für 1 - 5 Sekunden verweilt.

**Revendications**

**1.** Nourriture pour volaille qui contient du maïs, des sucres, une matière grasse, des protéines, des oligo-éléments, des vitamines, éventuellement des enzymes et/ou d'autres composants de nourriture classiques et qui a été soumise à un traitement thermique, **caractérisée en ce que** la nourriture contient des grains de maïs non pulvérisés et **en ce qu'**elle a été expansée de sorte que la nourriture forme un mélange principalement homogène dans lequel les grains sont combinés avec la masse de nourriture.

**2.** Nourriture pour volaille selon la revendication 1, **caractérisée en ce que** la nourriture contient du maïs sous une forme pulvérisée ou grossièrement broyée.

**3.** Nourriture selon la revendication 1, **caractérisée en ce que** la quantité de grains de maïs contenue dans la nourriture est de 1 à 90 % en poids, de manière appropriée de 10 à 50 % en poids, de préférence de 10 à 30 % en poids.

**4.** Mode opératoire pour la fabrication de nourriture pour volaille qui contient du maïs, des sucres, une matière grasse, des protéines, des oligo-éléments, des vitamines, éventuellement des enzymes et/ou d'autres composants de nourriture classiques et qui a été soumise un traitement thermique, **caractérisé en ce que** des grains de maïs non pulvérisés sont mélangés avec les autres composants de nourriture et le mélange obtenu est expansé de sorte que la nourriture forme un mélange principalement homogène dans lequel les grains sont combinés avec la masse de nourriture.

**5.** Mode opératoire selon la revendication 5, **caractérisé en ce que** le maïs pulvérisé ou grossière broyé est mélangé avec les autres composants de nourriture et le mélange obtenu est expansé.

**6.** Mode opératoire selon la revendication 4 ou 5, **caractérisé en ce que** la quantité de grains de maïs contenus dans la nourriture est de 1 à 90 % en poids, de façon appropriée de 10 à 50 % en poids, de préférence de 10 à 30 % en poids.

**7.** Mode opératoire selon l'une quelconque des revendications 4 à 6, **caractérisé en ce que** la température utilisée dans l'appareil à expanser est de 80 à 140°C, de préférence de 90°C à 110°C.

**8.** Mode opératoire selon l'une quelconque des revendications 4 à 7, **caractérisé en ce que** le mélange de composants de nourriture est maintenu dans l'appareil à expanser pendant 1 à 6 secondes, de préférence 1 à 5 secondes.